# EUROPEAN PATENT APPLICATION

(11) **EP 2 444 258 A2**
(43) Date of publication of application: **25.04.2012**
(21) Application number: 11185903.9
(22) Date of filing: 20.10.2011
(51) Int. Cl.: B60C 15/00, B60C 19/00

(54) **Reduced weight tire**

(30) Priority: 22.10.2010 US 910114
(71) Applicant: The Goodyear Tire & Rubber Company, Akron, OH 44316-0001 (US)
(72) Inventor: Ueyoko, Kiyoshi, Copley, OH 44321 (US)
(74) Representative: Kutsch, Bernd

(57) **Abstract**

A pneumatic tire (10) having a carcass (22) comprising at least two inner plies (1, 2, 3, 4) is disclosed. At least two if the inner plies (1, 2, 3, 4) is wound about an annular bead member (14) from axially inside of the annular bead member (14) toward axially outside thereof and extends radially outward towards a tread portion (20) of the tire (10) forming a respective turnup portion (2', 3', 4'). At least one of the inner plies (1) has a terminal end (1') which has a radial location in a zone (B) between a first plane (28) and a second plane (29), wherein the first plane (28) is tangent to the outer radial surface of the annular bead member (14) and parallel to the axis of rotation of the tire (10), and wherein the second plane (29) is parallel to the first plane (28) and tangent to the radial inner surface of the annular bead member (14). Preferably, the tire (10) is an aircraft tire such as a radial aircraft tire.

## Description

### Field of the Invention

This invention relates to a pneumatic tire having a carcass and preferably also a belt reinforcing structure, and more preferably to high speed heavy load tires such as those used on aircraft.

### Background of the Invention

The radial carcass reinforcements of aircraft tires generally comprise several plies of textile cords, which are anchored to at least one annular bead member. A first group of reinforcing plies are generally wound around said annular bead member from the inside to the outside, forming turn-ups, the respective ends of which are radially spaced from the axis of rotation of the tire. The second group of plies are generally wound around the annular bead member from the outside to the inside of the tire.

Aircraft tires typically use numerous layers of ply which can significantly contribute to the tire weight. The numerous layers of ply may result in bead durability issues. It is thus desired to provide a lightweight efficient tire structure having improved bead durability. It is a further desired to provide an improved bead structure wherein the use of inside turn-up plies and outside turndown plies and their respective locations are optimized. Thus an improved aircraft tire is needed, which is capable of meeting high speed, high load and with reduced weight.

### Summary of the Invention

The invention relates to a pneumatic tire in accordance with claim 1.

Dependent claims refer to preferred embodiments of the invention.

In one preferred aspect of the invention, one or more of the inner plies does not wrap around the annular bead member and has a terminal end located between the first plane and the second plane. In one embodiment, the first inner ply does not wrap around the annular bead member and has a terminal end located between the first plane and the second plane. In a second embodiment, the second inner ply does not wrap around the annular bead member and has a terminal end located between the first plane and the second plane. In a third embodiment, a third inner ply does not wrap around the annular bead member and has a terminal end located between the first plane and the second plane. In a fourth embodiment, a fourth inner ply does not wrap around the annular bead member and has a terminal end located between the first plane and the second plane. In a fifth embodiment, a fifth inner ply does not wrap around the annular bead member and has a terminal end located between the first plane and the second plane. In a sixth embodiment, a sixth inner ply does not wrap around the annular bead member and has a terminal end located between the first plane and the second plane.

In another preferred aspect of the invention, the tire has a carcass and preferably also a belt reinforcing structure. The carcass comprises at least two inner plies which may be wound about a annular bead member from axially inside of the annular bead member toward axially outside thereof and preferably extend radially outward towards the crown to form respective turnup portions, wherein at least one of the inner plies does not wrap around the annular bead member and has a terminal end which has a radial location between the first plane and the second plane, the carcass further comprising at least two outer plies which extend radially inward from the crown and axially outward of the annular bead member and further extend axially outward and are wrapped around the bead terminating in endings, wherein at least one of the outer carcass plies has an ending that overlaps with the terminal end of the inner carcass ply between the first plane and the second plane.

### Definitions

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands which the plies in the tire comprise.

"Equatorial plane (EP)" means the plane perpendicular to the tire's axis of rotation and passing through the center of its tread.

"Ply" means a continuous layer of rubber-coated preferably parallel cords.

"Radial" and "radially" mean directions radially toward or away from the axis of rotation of the tire.

"Radial-ply tire" means a belted or circumferentially-restricted pneumatic tire in which the ply cords which extend from bead to bead are laid at cord angles between 65° and 90 ° with respect to the equatorial plane of the tire.

"Zigzag belt reinforcing structure" means at least two layers of cords or a ribbon of parallel cords having preferably 1 to 20 cords in each ribbon and laid up in an alternating pattern extending at an angle between 5 ° and 30 ° between lateral edges of the belt layers.

### Brief Description of the Drawings

The invention will be described by way of example and with reference to the accompanying drawings in which:
FIG. 1 is a schematic cross-sectional view of a first embodiment of one-half of a tire according to the invention;
FIG. 2 is a close up cross-sectional view of the bead area of the tire of Fig. 1; and
FIG. 3 is a second embodiment of the bead area of the tire.

### Detailed Description of the Invention

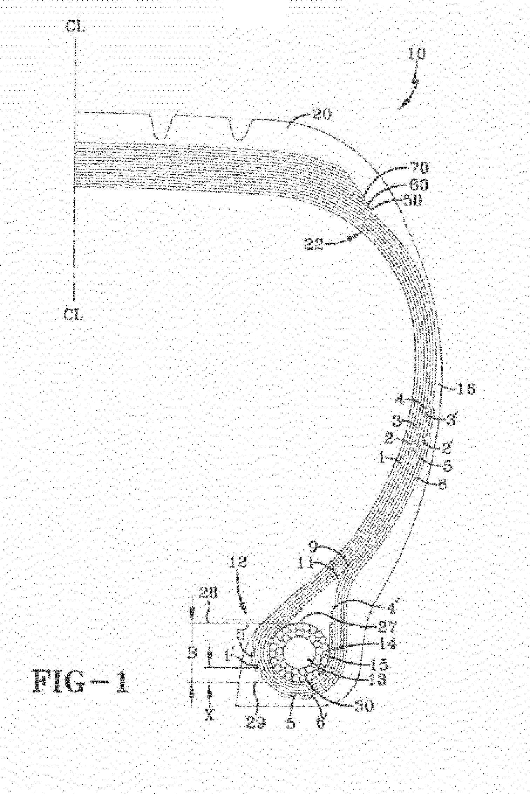

Figure 1 illustrates a cross-sectional view of one half of a tire such as a radial aircraft tire 10 in an example embodiment of the present invention. The tire is preferably symmetrical about the mid-circumferential plane so that only one half is illustrated. As shown, the aircraft tire comprises a pair of bead portions 12 each containing a annular bead member 14 embedded therein. One example of a annular bead member suitable for use in an aircraft tire is shown in US-B-6,571,847. The annular bead member 14 preferably has an aluminum, aluminum alloy or other light weight alloy in the center portion 13 surrounded by a plurality of steel sheath wires 15. A person skilled in the art may appreciate that other annular bead members may also be utilized.

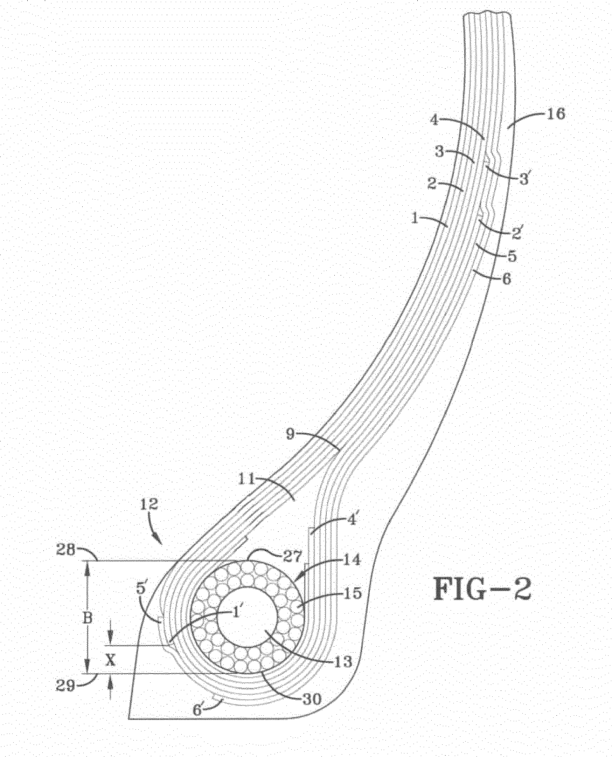

The tire 10 further comprises a sidewall portion 16 extending substantially outward from each of the bead portions 12 in the radial direction of the tire, and a tread portion 20 extending between the radially outer ends of the sidewall portions 16. Furthermore, the tire 10 is reinforced with a carcass 22 toroidally extending from one of the bead portions 12 to the other bead portion 12. The carcass 22 comprises at least two inner carcass plies 1, 2, 3, 4 and outer carcass plies 5, 6, preferably oriented in the radial direction. Among these carcass plies, typically four axially inner plies 1, 2, 3, 4 extend radially inward from the crown towards the bead area. At least two of the four axially inner plies 1, 2, 3, 4 are wound around the annular bead member 14 from axially inside of the annular bead member toward axially outside thereof and extends radially outward towards the crown to form respective turnup portions 1', 2', 3', 4'. Preferably, the ply adjacent the bead 4 has a turnup 4' that is located between plane 28 and the outer radial end or tip 9 of an apex 11. As best shown in Fig. 2, at least one of the plies, e.g., 1, does not wrap around the annular bead member and has a terminal end 1' which is located within a zone denoted as "B." Preferably, the axially innermost ply has an ending terminating in Zone B. Zone B is defined by a first plane 28 that is tangent to the radially outermost surface of the annular bead member at a point 27, and wherein the first plane 28 is parallel to the tire axis of rotation. Zone B is further defined by a second plane 29 that is tangent to the inner radial surface of the annular bead member at a point 30, and wherein the second plane 29 is parallel to the axial direction (i.e., parallel to the axis of rotation of the tire). The first plane 28 and the second plane 29 are parallel to each other and separated by a distance D equal to the annular bead member diameter. Thus at least one of the turnup plies has a terminal end having a radial position between the first plane and the second plane. Two of the axially inner plies may have a terminal end located within Zone B, which are preferably located adjacent to each other. However no more than 50% of the total axially inner plies may have a terminal end located within Zone B.

The carcass further comprises at least two outer plies 5, 6 which extend radially inward from the crown and are axially outward of the annular bead member 14 along the outside of the turnup portion of the inner carcass plies 24. The two outer carcass plies 5,6 extend down from the crown and further extend axially outward and are wrapped around the bead terminating in endings 5', 6', respectively. Preferably, one of the endings 5', 6' overlap with the one or more inner plies which has a terminal end having a radial location in Zone B. Preferably, two of the endings 5', 6' overlap with the one or more inner plies which has a terminal end in Zone B.

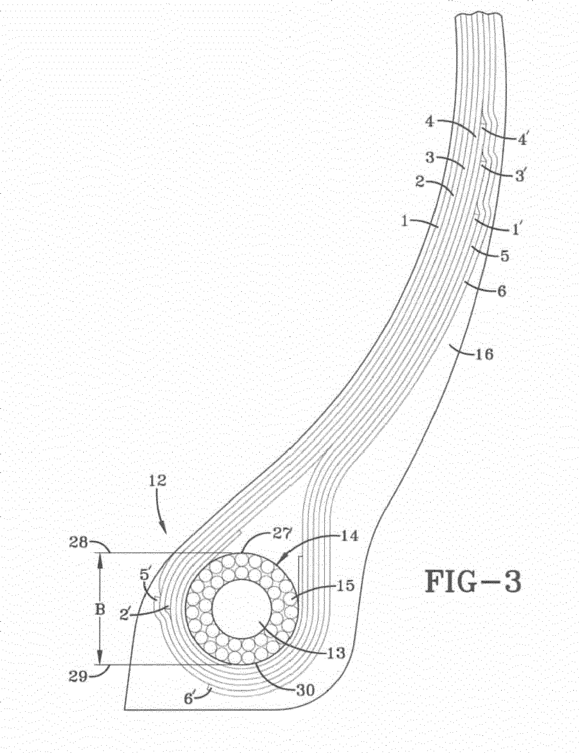

Figure 3 illustrates a second embodiment of the invention. As shown in Figure 3, the axially inner ply 2 has an ending having a radial location within Zone B, located at a distance X from plane 29. Preferably, the terminal end 2' of the ply 2 is located a radial distance X from the second plane 29 in the range of from 1 mm to 10 mm and more preferably in the range of 1 mm to 5 mm. Although not shown, the inner ply 4 may have a turnup end 4' located between plane 28 and the apex tip 9. Preferably outer ply ending 5' or 6' overlaps with the terminal ending 2' of ply 2.

Each of these carcass plies 1-6 may comprise any suitable cord, typically nylon cords such as nylon-6,6 cords extending substantially perpendicular to an equatorial plane EP of the tire (i.e. extending in the radial direction of the tire). Preferably, the nylon cords have an 1890 denier/2 or 1890 denier/3 construction. One or more of the carcass plies may also comprise an aramid and nylon cord structure, for example, a hybrid cord, a high energy cord or a merged cord. Examples of suitable cords are described in US-B- 4,893,665, US-B- 4,155,394 or US-B-6,799,618.

The aircraft tire 10 further comprises a belt package arranged between the carcass 22 and the tread rubber 20. Figure 3 illustrates a first embodiment of one half of a belt package suitable for use in the aircraft tire. The belt package is symmetrical about the mid-circumferential plane so that only one half of the belt package is illustrated. The belt package as shown comprises a first belt layer 50 located adjacent the carcass. The first belt layer 50 is preferably formed of cords having an angle of 5 degrees or less with respect to the mid-circumferential plane. Preferably, the first belt layer 50 is formed of a rubberized strip 43 of two or more cords made by spirally or helically winding the cords at an angle of plus or minus 5 degrees or less relative to the circumferential direction. The first belt layer 50 is the narrowest belt structure of the belt package, and preferably has a width in the range of 13% to 100% of the rim width (width between flanges).

The belt package further comprises a second belt layer 60 located radially outward of the first belt layer 50. The second belt layer 60 is preferably formed of cords having an angle of 5 degrees or less with respect to the mid-circumferential plane. Preferably, the second belt layer 60 is formed of a rubberized strip of two or more cords made by spirally or helically winding the cords at an angle of plus or minus 5 degrees or less relative to the circumferential direction. The second belt layer preferably has a width in the range of 101 % to 120% of the rim width, and has a width greater than the first belt layer 50. More preferably, the second belt layer 60 is the widest belt layer of the belt package.

In any of the above described embodiments, the cords are preferably continuously wound from one belt structure to the next.

The cords of any of the above described carcass, spiral or zigzag belt layers described above may be nylon, nylon 6,6, aramid, or combinations thereof, including merged, hybrid, high energy constructions known to those skilled in the art. One example of a suitable cord construction for the belt cords, carcass cords (or both), may comprise a composite of aramid and nylon, containing two cords of a polyamide (aramid) with construction of 3300 dtex with a 6.7 twist, and one nylon or nylon 6/6 cord having a construction of 1880 dtex, with a 4.5 twist. The overall merged cable twist is 6.7. The composite cords may have an elongation at break greater than 11 % and a tensile strength greater than 900 newtons. Optionally, the original linear density may be greater than 8500 dtex. Elongation, break, linear density and tensile strength are determined from cord samples taken after being dipped but prior to vulcanization of the tire.

## Claims

1. A pneumatic tire having a carcass (22) comprising at least two inner plies (1, 2, 3, 4) of which at least one is wound about an annular bead member (14) from axially inside of the annular bead member (14) toward axially outside thereof and extends radially outward towards a tread portion (20) of the tire (10) forming a respective turnup portion (2', 3', 4'), wherein at least one of the inner plies (1) has a terminal end (1') which has a radial location in a zone (B) between a first plane (28) and a second plane (29), wherein the first plane (28) is tangent to the outer radial surface of the annular bead member (14) and parallel to the axis of rotation of the tire (10), and wherein the second plane (29) is parallel to the first plane (28) and tangent to the radial inner surface of the annular bead member (14).

2. The tire of claim 1 wherein the zone (B) is located radially inward of the first plane (28) and axially inward of the annular bead member (14).

3. The tire of claim 1 or 2 wherein the carcass (22) further comprises at least two outer plies (5, 6) which extend axially outward of the annular bead member (14) and wherein optionally at least one or a plurality of the outer carcass plies (5, 6) is/are wound about the annular bead member (14).

4. The tire of claim 3 wherein the outer carcass plies (5, 6) each have a ply ending (5', 6') located radially inward of the first plane (28) or located radially inward of the second plane (28).

5. The tire of at least one of the previous claims wherein at least one of the outer carcass plies (5, 6) has a ply ending (5', 6') that overlaps with the terminal end (1', 2', 3', 4') of at least one of the inner carcass plies (1, 2, 3, 4) in the zone (B).

6. The tire of at least one of the previous claims wherein the axially outermost inner ply (4) has a terminal end (4') located the first zone (C), and/or wherein the axially innermost inner ply (1) has a terminal end (1') located in the zone (B).

7. The tire of claim 1 or 6 wherein the axially outermost inner ply (4) does not wrap about the annular bead member (14) or at least not fully wrap about the annular bead member (14), and/or wherein the axially innermost ply (1) does not wrap about the annular bead member (14) or at least not fully wrap about the annular bead member (14).

8. The tire of at least one of the previous claims wherein at least one of the inner plies (4) has a terminal end (4') located radially between the first plane (28) and a radially outer tip of a bead apex (40).

9. The tire of at least one of the previous claims wherein the tire (10) comprises four or at least four inner plies (1, 2, 3, 4) and two or at least two outer plies (5, 6).

10. The tire of claim 1 or 9 wherein no more than 50% of the inner plies (1, 2, 3, 4) have a terminal end located between the first plane (28) and the second plane (29), and/or wherein no more than 50% of the inner plies (1, 2, 3, 4) wrap about the annular bead member (14).

11. The tire of at least one of the previous claims wherein the outer carcass plies (5, 6) each have a ply ending (5', 6'), wherein
(i) a ply ending of one of the outer carcass plies (5, 6) is located radially inward of the second plane (29) and a ply ending of an other of the outer carcass plies (5, 6) has a radial location in the zone (B) axially inward of the annular bead member (14), or
(ii) a ply ending of one of the outer carcass plies (5, 6) is located radially inward of the second plane (29) and a ply ending of an other of the outer carcass plies (5, 6) has a radial location in the zone (B) axially outward of the annular bead member (14), or
(iii) a ply ending of one of the outer carcass plies (5, 6) has a radial location in the zone (B) axially outward of the annular bead member (14) and a ply ending of an other of the outer carcass plies (5, 6) has a radial location in the zone (B) axially inward of the annular bead member (14), or
(iv) a ply ending of one of the outer carcass plies (5, 6) is located radially inward of the first plane (28), preferably with the zone (B) either axially inward or outward of the annular bead member (14), and an other of the outer carcass plies (5, 6) is wound about the annular bead member (14) and has a ply ending at a radial location radially above the first plane (28), or
(v) a ply ending of one of the outer carcass plies (5, 6) is located radially inward of the second plane (29) and an other of the outer carcass plies (5, 6) is wound about the annular bead member (14) and has a ply ending at a radial location radially above the first plane (28).

12. The tire of at least one of the previous claims wherein only one of the inner plies (1) has a terminal end (1') having a radial location in the zone (B) and
(i) the other inner plies (1, 3, 4) have respective terminal ends (1', 3', 4') at radial locations radially above the first plane (28), and/or
(ii) the other inner plies (1, 3, 4) are wound about the annular bead member (14).

13. The tire of at least one of the previous claims wherein carcass (22) is a radial carcass comprising carcass ply cord fibers made from at least one of aramid, polyketone, nylon or a nylon and aramid blend.

14. The tire of at least one of the previous claims wherein the tire (10) further comprises a belt reinforcing structure.

15. The tire of at least one of the previous claims wherein the tire (10) is an aircraft tire such as a radial aircraft tire.
